(19) Europäisches Patentamt
European Patent Office
Office européen des brevets

(11) **EP 1 906 225 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(51) Int Cl.:
**G02B 23/24** (2006.01) **G02B 21/00** (2006.01)

(21) Anmeldenummer: **07018905.5**

(22) Anmeldetag: **26.09.2007**

(54) **Miniaturisiertes optisch abbildendes System mit hoher lateraler und axialer Auflösung**

Miniaturised optical display system with high lateral and axial resolution

Système de représentation optique miniature à haute résolution axiale et latérale

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.09.2006 DE 102006046555**

(43) Veröffentlichungstag der Anmeldung:
**02.04.2008 Patentblatt 2008/14**

(73) Patentinhaber: **GRINTECH GmbH**
**07745 Jena (DE)**

(72) Erfinder: **Messerschmidt, Bernhard, Dr.**
**07749 Jena (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**EP-A- 0 609 093    GB-A- 2 178 555**
**US-A- 5 377 047    US-B1- 6 252 722**

## Beschreibung

Die Erfindung betrifft ein miniaturisiertes optisch abbildendes System mit hoher lateraler und axialer Auflösung für endomikroskopische Anwendungen, bei dem mindestens eine GRIN-Optik mit radialem Brechzahlprofil eingesetzt ist, die eine optische Abbildung von oberflächennahen Bereichen eines Objekts in einer Bildebene ermöglicht.

Miniaturoptiken spielen vor allem für mikroskopische Abbildungen, insbesondere in der Endomikroskopie, eine große Rolle. Endomikroskopische Untersuchungsinstrumente zeichnen sich dadurch aus, dass sie einen optischen Bildaufnahmekopf haben, der im Durchmesser sehr klein ist (wenige Millimeter) und bei dem das Bild über im Vergleich zum Durchmesser sehr lange Strecken übertragen werden muss.

Eine solche Miniaturoptik bildet die Oberfläche des Objekts mit hoher Auflösung im Mikrometerbereich ab, wobei das Bild im Durchlichtmodus, fluoreszenzmikroskopisch, reflexionsmikroskopisch, konfokal-mikroskopisch oder durch scannende Multiphotonen-Fluoreszenzanregung erzeugt wird.

In Anwendungen dieser Art werden erfahrungsgemäß Gradientenindex-(GRIN-)Linsen für den Aufbau der Miniaturoptik eingesetzt, da sie mit typischen kleinen Durchmessern zwischen 0,2 und 2,0 mm eine beachtlich gute Abbildungsqualität aufweisen und sich aufgrund ihrer in der Regel ebenen optischen Flächen gut zu kleinen Linsensystemen integrieren lassen. Bei GRIN-Linsen beruht die optische bildgebende Wirkung darauf, im Linsenmedium ein Brechzahlprofil aufzubauen und damit die Brechung zwischen zwei Medien (z.B. zwischen Luft und Glas) an gewölbten Oberflächen nicht zwingend zur Bildentstehung zu benötigen. Damit ergibt sich eine vergleichsweise einfache Montage der Miniaturoptik. Solche miniaturisierten Optiken sind beispielsweise für endoskopische Anwendungen aus EP 1 283 413 B1 und für Laser-Scanning-Mikroskope aus DE 100 15 455 A1 bekannt.

Weitere miniaturisierte Endoskopoptiken unter Verwendung von GRIN-Linsen sind aus US 5,377,047 A, US 6,252,722 B1 und GB 2 178 555 A bekannt geworden. Diese sind jedoch auf eine Erweiterung des Gesichtsfeldes (Gesichtswinkel bzw. Schärfentiefe) ausgerichtet, so dass sie wegen sehr kleiner numerischer Aperturen kein hohes Auflösungsvermögen erreichen können.

Eine weitere Endoskopoptik, die in EP 0 609 093 A1 offenbart ist, verwendet eine Vielzahl von GRIN-Linsen als eine Relay-Optik für lange Übertragungswege und setzt dabei diffraktive oder holografische Elemente zur Kompensation von optischer Aberration ein, indem solche Elemente an gekrümmten (bzw. nicht orthogonalen) Endflächen der GRIN-Linsen angebracht sind, um eine Überkorrektur der chromatischer Aberration zum Zwecke der Kompensation von Unterkorrekturzuständen nachfolgender refraktiver Komponenten zu erreichen. Eine solche Kompensationsmethode ist jedoch nur bei 1:1-Abbildungsoptiken, also für reine Relay-Optiken, sinnvoll.

Nachteilig an den vorgenannten Lösungen ist die erreichbare Abbildungsqualität, die vor allem aufgrund einer niedrigen Photoneneffizienz und eines begrenzten lateralen und axialen Auflösungsvermögens (infolge der bekannten relativ niedrigen numerischen Apertur der GRIN-Linsen von ca. 0,55) sowie der chromatischen Aberration der GRIN-Linsen deutliche Mängel aufweist.

Der Erfindung liegt die Aufgabe zugrunde, eine neue Möglichkeit zur Realisierung eines miniaturisierten optischen Kopfes für endomikroskopische Anwendungen zu finden, die bei hoher lateraler und axialer Ortsauflösung gegenüber üblichen GRIN-Optiken eine deutliche Erhöhung der Photoneneffizienz gestattet, ohne dass komplizierte mehrlinsige Systeme verwendet werden müssen.

Eine erweiterte Aufgabe besteht darin, bei der optischen Abbildung die insbesondere in GRIN-Optiken in der Regel nicht behebbare chromatische Aberration zu korrigieren.

Erfindungsgemäß wird die Aufgabe bei einem miniaturisierten optisch abbildenden System mit hoher lateraler und axialer Auflösung für endomikroskopische Anwendungen, bei dem mindestens eine GRIN-Optik mit radialem Brechzahlprofil eingesetzt ist, die eine optische Abbildung von oberflächennahen Bereichen eines Objekts in einer Bildebene für ein optisches Übertragungssystem mit gegenüber der Übertragungslänge geringem Durchmesser erzeugt, dadurch gelöst, dass eine refraktive plankonvexe Linse in Form eines homogenen optischen Kugellinsenelements vorhanden ist und mit der GRIN-Optik ein optisches System bildet, wobei die plane Seite des Kugellinsenelements eine ebene Eintrittsfläche des optischen Systems definiert und die Eintrittsfläche orthogonal zu einer gemeinsamen optischen Achse des optischen Systems und des Übertragungssystem ausgerichtet ist, dass dem Kugellinsenelement nachgeordnet eine erste GRIN-Linse zur Divergenzreduktion des stark divergenten Lichtbündels vom Kugellinsenelement vorhanden ist und dass der ersten GRIN-Linse nachgeordnet eine zweite GRIN-Linse zum Anpassen des von der ersten GRIN-Linse übertragenen Lichtbündels an die Apertur und das Objektfeld des nachfolgenden Übertragungssystems entlang der optischen Achse angeordnet ist.

Vorteilhaft ist in einem schwach divergenten Bereich des Lichtbündels des optischen Systems eine diffraktive Linse zur Korrektur der chromatischen Aberration von refraktivem Kugellinsenelement und GRIN-Optik vorhanden. Vorzugsweise ist die diffraktive Linse zwischen erster und zweiter GRIN-Linse angeordnet.

In einer alternativen Variante ist die diffraktive Linse zweckmäßig zwischen refraktiver Linse und objektseitiger erster GRIN-Linse zur Korrektur der chromatischen Aberration eines optischen Systems angeordnet.

Vorzugsweise ist das optische System, das mindestens aus Kugellinsenelement, erster und zweiter GRIN-Linse besteht, innerhalb einer zylindrischen mechanischen Fassung als miniatur-optischer Kopf angeordnet, wobei die mechanische Fassung mit einem Fenster als Eintrittsfläche vor der Planfläche des Kugellinsenelements hermetisch abgeschlossen ist.

Vorteilhaft werden sämtliche optische Komponenten des optischen Systems ohne Zwischenräume entlang der optischen Achse angeordnet.

Zur Komplettierung des miniatur-optischen Kopfes für endomikroskopische Anwendungen ist der zweiten GRIN-Linse auf der optischen Achse folgend vorzugsweise ein Bildleitfaserbündel oder zweckmäßig eine starre Relayoptik nachgeordnet. Es kann aber auch der zweiten GRIN-Linse folgend eine einzelne optische Faser nachgeordnet sein, die mit Hilfe eines Mikroscanners bezüglich des optischen Systems des Kopfes bewegt wird und damit ein Bild abtastet.

In der mechanischen Fassung des miniaturoptischen Kopfes ist der zweiten GRIN-Linse folgend das Übertragungssystem vorteilhaft mittels einer Adapterhülse befestigt.

Dabei wird mittels der Adapterhülse zweckmäßig eine dünne Anregungsfaser zur Lichteinkopplung justiert, wobei entweder um die dünne Anregungsfaser herum eine Empfangsfaser konzentrisch zur optischen Achse vorhanden und mit der Adapterhülse justiert ist oder die dünne Anregungsfaser entlang der optischen Achse zugleich als Empfangsfaser verwendet wird.

In einer ersten Ausführung der Erfindung weisen die erste und die zweite GRIN-Linse vorteilhaft das gleiche Brechzahlprofil auf.

Es kann aber auch zweckmäßig sein, dass die erste und die zweite GRIN-Linse unterschiedliche Brechzahlprofile aufweisen, um verschiedene wellenlängenabhängige Eigenschaften einzustellen.

Bei einer vereinfachten Gestaltung, an die keine hohen Anforderungen an die chromatische Korrektur gestellt werden und bei der somit keine diffraktive Linse erforderlich ist, z.B. bei monochromatischer Arbeitsweise, bei integraler Signalaufnahme im Falle der Multiphotonenmikroskopie oder bei Einsatz eines faseroptischen Scanners als Übertragungssystem zum Sensor, können die erste und zweite GRIN-Linse auch zu einer GRIN-Linse zusammengefasst sein.

In einer speziellen Ausgestaltung der Erfindung gemäß Anspruch 16 ist die zweite GRIN-Linse durch die konventionelle Optik eines Mikroskopaufbaus ersetzt, wobei der miniaturoptische Kopf das sonst vorhandene Mikroskopobjektiv ersetzt.

Dabei ist zweckmäßig eine diffraktive Linse zur Korrektur der chromatischen Aberration in einem schwach divergenten Bereich des Lichtbündels des optischen Systems angeordnet.

Insbesondere für endomikroskopische Anwendung ist es häufig zweckmäßig, zwischen erster und zweiter GRIN-Linse ein Umlenkelement anzuordnen, um z.B. Hohlräume lateral abzutasten. Das Umlenkelement ist vorzugsweise ein verspiegeltes Prisma. Es kann aber auch vorteilhaft sein, dass das Umlenkelement ein Strahlteiler ist, um vorzugsweise Anregungslicht und vom Objekt emittierte Strahlung zu trennen. Der Strahlteiler kann dafür zweckmäßig zwischen zwei gleichseitigen Prismen eine dichroitische Beschichtung zur spektralen Trennung der Anregungsstrahlung von der Objektemission aufweisen.

Durch die Kombination des Kugellinsenelements und der GRIN-Linse lässt sich die numerische Apertur der Miniaturoptik deutlich (auf bis zu NA = 0,85) erhöhen. Kugellinsenelement und GRIN-Linse sind dabei als System zu betrachten, da das Brechzahlprofil der GRIN-Linse derart geformt ist, dass die starke sphärische Aberration, die das Kugellinsenelement einträgt, durch die GRIN-Linse korrigiert wird.

Typischerweise besitzen Kugellinsen und GRIN-Linsen eine normale chromatische Aberration, bei der kurze Wellenlängen eine kürzere Brennweite aufweisen als größere längere Wellenlängen. Eine Korrektur der chromatischen Aberration der GRIN-Linse(n) kann in oder ohne Kombination mit Kugellinsenelement durch ein diffraktiv-optisches Linsenelement erreicht werden, so dass sich ein für zwei Wellenlängen achromatisiertes Gesamtsystem ergibt.

Da diffraktive Linsen eine starke anormale chromatische Aberration aufweisen, bei der die Brennweite $f = C/\lambda$ mit dem Reziprokwert der Wellenlänge $\lambda$ skaliert und die Proportionalitätskonstante $C$ durch die geometrische Struktur der diffraktiven Linse bestimmt ist, besitzen diffraktive Linsen bei kurzen Wellenlängen eine längere Brennweite als bei größeren Wellenlängen und sind somit bestens für die Kompensation der normalen chromatischen Aberration von GRIN-Linsen geeignet.

Die Wahl der achromatisierten Wellenlängen wird je nach Anwendung geeignet angepasst und kann z.B. im Falle eines Zweiphotonenmikroskops für eine Wellenlänge im Bereich des Anregungslichtes im nahen infraroten Spektralbereich und für die andere Wellenlänge im Bereich der Zweiphotonenfluoreszenz im Bereich der halben Wellenlänge des Anregungslichtes liegen. Bei einem Einphotonen-Laserscanning-Mikroskop kann sinnvoll die eine Wellenlänge die Anregungswellenlänge des Lasers sein und die andere Wellenlänge im Bereich der Fluoreszenz des Objektes oder der verwendeten Farbstoffe liegen.

Mit der Erfindung ist es möglich, einen miniaturisierten optischen Kopf für endomikroskopische Anwendungen zu realisieren, der eine hohe laterale und axiale Ortsauflösung sowie eine gegenüber üblichen GRIN-Optiken deutlich erhöhte Photoneneffizienz aufweist, ohne komplizierte mehrlinsige Systeme zu verwenden. Der erfindungsgemäße miniaturoptische Kopf hat eine objektseitig hohe numerische Apertur, die den wesentlichen Zuwachs an Photoneneffizienz und optischer Auflösung bewirkt.

Vergrößerung und bildseitige numerische Apertur des miniatur-optischen Kopfes sind so einstellbar, dass sie an endomikroskopische Bildübertragungssysteme gut angepasst werden können.

Weiterhin weist das optische System minimierte Bildfehler, wie sphärische und chromatische Aberration und Bildfeldwölbung auf, wobei die bei Verwendung von GRIN-Linsen typische chromatische Aberration durch eine Kombination mit diffraktiven Linsen einfach und hinreichend kompensierbar ist.

Die Erfindung soll nachstehend anhand von Ausführungsbeispielen näher erläutert werden. Die Zeichnungen zeigen:

Fig. 1:    eine Prinzipansicht des erfindungsgemäßen miniatur-optischen Systems,

Fig. 2:    eine Variante der Erfindung als endomikroskopischer Kopf mit Bildübertragungsoptik,

Fig. 3:    eine Variante als endomikroskopischer Kopf mit integraler Detektion,

Fig. 4:    eine Ausführung des miniatur-optischen Systems für besonders einfache Montage ohne Zwischenräume,

Fig. 5:    eine reduzierte nicht erfindungsgemäße Ausführung des miniatur-optischen Systems als ausschließlich achromatische GRIN-Optik,

Fig. 6:    eine spezielle Ausführung eines als Eingangsoptik adaptierten miniaturoptischen Systems für einen Mikroskopaufbau,

Fig. 7:    eine Variante des optischen Systems mit strahlumlenkendem Element für laterale Abtastflächen, insbesondere bei endomikroskopischen Anwendungen,

Fig. 8:    eine Gestaltung des miniatur-optischen Systems mit Strahlteiler für die Separierung von Anregungslicht und Objektstrahlung.

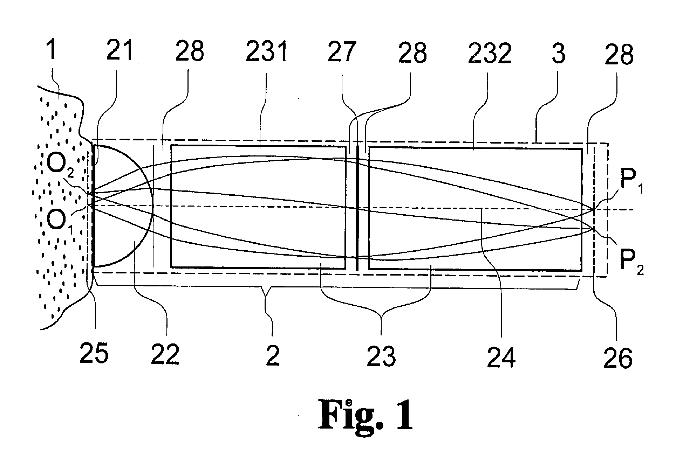

Für eine örtlich hochauflösende Abbildung eines Objekts 1 besteht ein miniaturoptisches System 2 gemäß der Erfindung, wie in Fig. 1 gezeigt, in seinem Grundaufbau aus einer Eintrittsfläche 21, die in Form der Planseite eines plankonvexen Kugellinsenelements 22 auf das Objekt 1 aufgesetzt wird, und einer GRIN-Optik 23, die entlang einer gemeinsamen optischen Achse 24 des optischen Systems 2 der Kugellinse 22 nachgeordnet ist. Je nach anwendungsbedingter Berechnung des gesamten Systems 2 kann dessen Objektebene 25, auf der in Fig. 1 ausgewählte Objektpunkte $O_1$ und $O_2$ liegen, mehr oder weniger tief im Volumen des Objektes 1 liegen.

Falls die normale chromatische Aberration des refraktiven Kugellinsenelements 22 und der GRIN-Optik 23, die zu einer kürzeren Brennweite bei kleinen Wellenlängen als bei größeren Wellenlängen führt, kompensiert werden soll, wird eine diffraktive Linse 27 in den Strahlengang der GRIN-Optik 23 eingebracht. Diffraktive optische Elemente, die üblicherweise als eine beugende Mikrostruktur (z.B. Beugungsgitter) ausgeführt sind, weisen eine starke anormale chromatische Aberration auf, bei der die Brennweite mit dem Reziprokwert der Wellenlänge $\lambda$ skaliert ($f = C/\lambda$), so dass sich - bei entsprechender Einstellung der Strukturkonstanten C der diffraktiven Linse 27 - ein für wenigstens zwei Wellenlängen achromatisiertes optisches System 2 einstellen lässt.

Die diffraktive Linse 27 ist - soweit Achromatisierung erforderlich ist - zweckmäßig in einem Bereich mit geringer Strahldivergenz positioniert, um eine hohe farbkorrigierende Beugungseffizienz bei geringer Dicke der diffraktiven Linse 27 zu erreichen. Ein solcher Bereich ist - wie in Fig. 1 gezeigt - vorhanden, wenn die GRIN-Optik 23 eine erste objektnahe GRIN-Linse 231 und eine objektferne GRIN-Linse 232 aufweist, zwischen denen die diffraktive Linse 27 eingefügt werden kann. Die objektferne GRIN-Linse 232 bildet dann das achromatisierte Strahlenbündel in die Bildebene 26 ab, in der eine Zwischenabbildung erzeugt wird, die an die Apertur und das Objektfeld eines angeschlossenen Übertragungssystems 4 zu einer Sensoreinheit (nicht dargestellt) anpasst ist.

Alternativ kann die diffraktive Linse 27 aber auch im divergenten Bündel zwischen dem Kugellinsenelement 22 und der objektseitigen GRIN-Linse 231 angeordnet sein.

In der Regel bildet das miniatur-optische System 2 die innerhalb des Objekts 1 liegenden Objektpunkte $O_1$ und $O_2$ mit einer gewünschten Vergrößerung in die Bildpunkte $P_1$ und $P_2$ einer Bildebene 26 ab, die (zumindest für endomikroskopische Anwendungen) nur eine Zwischenbildebene für das nachfolgende Übertragungssystem 4 darstellt.

Für biologische oder medizinische Anwendungen weist das optische System 2 zwischen Objektebene 25 und optischer Eintrittsfläche 21 typischerweise einen Abstand zwischen 20-200 µm auf, wobei im speziellen Fall der Multiphotonenmikroskopie die Abstände bis über 1 mm reichen können.

Charakteristische Größen des optischen Systems 2 sind:

-    Durchmesser, optische Dicke und Brechzahl der Kugellinse 22,

-    Durchmesser, Dicke und Brechzahlprofil der objektnahen GRIN-Linse 231 mit dispersiven (wellenlängenabhängigen) Eigenschaften,

-    Durchmesser, Dicke und Brechzahlprofil einer objektfernen GRIN-Linse 232 mit dispersiven (wellenlängenabhängigen) Eigenschaften,

-    Durchmesser, Dicke und Brennweiten bei vorgegebenen Wellenlängen einer diffraktiven Linse 27 zur Achromatisierung der gesamten GRIN-Optik 23, sowie

- Zwischenräume 28 zwischen den vorgenannten optischen Komponenten, falls im konstruktiven Design des optischen Systems 2 vorteilhaft oder erforderlich.

Wegen der Miniaturisierung aller optischen Komponenten (ca. 1 mm Durchmesser) werden die Zwischenräume 28 entlang der optischen Achse 24 beim Systemdesign möglichst zu Null optimiert, um die Justierung des gesamten optischen Systems 2 zu vereinfachen. Soweit erforderlich bzw. zwingend vorhanden, können die Zwischenräume mit einem oder verschiedenen homogenen Medien gefüllt sein, um die optischen oder mechanischen Eigenschaften des gesamten Systems 2 zu beeinflussen. Im einfachsten Fall werden sie als Luftspalte ausgeführt sein oder ein anderes geeignetes Füllgas enthalten. Bei besonderen mechanisch anspruchsvollen (z.B. biegebelasteten) optischen Köpfen kann es sinnvoll sein, die Zwischenräume mit optischem Kitt oder Gel zu füllen, die geeignete Brechzahlen aufweisen. Die GRIN-Linsen 231 und 232 müssen nicht dasselbe Brechzahlprofil aufweisen. Insbesondere ist die objektferne GRIN-Linse 232 wesentlich dazu bestimmt, die Vergrößerung und die numerische Apertur an das nachfolgende Übertragungssystem 4, das sehr unterschiedlich aussehen kann, anzupassen.

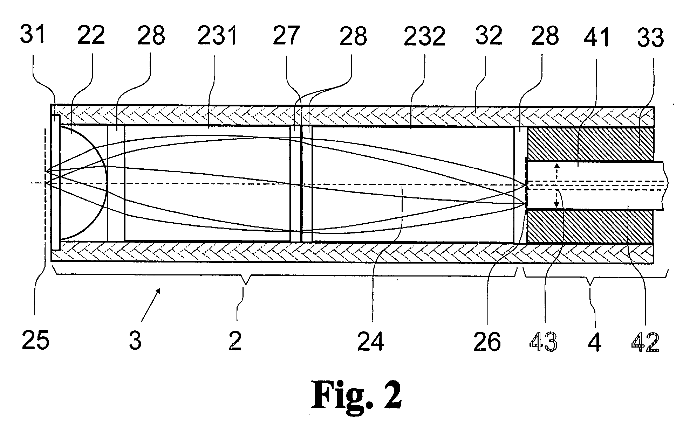

Fig. 2 zeigt ein Ausführungsbeispiel des optischen Systems 2 mit mechanischem Gehäuse. Die Eintrittsfläche 21 des optischen Systems 2 wird vorteilhaft durch ein optisches Fenster 31 aus kratzfestem Glas oder Saphir realisiert, das in eine mechanische Fassung 32 für alle optischen Elemente des miniatur-optischen Kopfes 3 hermetisch dicht eingeklebt oder eingelötet wird. Das Kugellinsenelement 22 wird (mit brechzahlangepasstem optischem Kitt) innen auf das Fenster 31 geklebt oder (bei polierten Oberflächen durch Aufsetzen unter kurzem definiertem Druck) optisch angesprengt (optical contacting).

Für eine endoskopische Bildübertragung von der Bildebene 26 der objektfernen GRIN-Linse 232 ist ein optisches Übertragungssystem 4 zu einer Sensoreinheit (nicht dargestellt) vorhanden. Fig. 2 zeigt dazu das Ende eines flexiblen Bildleitfaserbündels 41, das durch eine Adapterhülse 33 in der mechanischen Fassung 32 des miniaturoptischen Kopfes 3 befestigt ist. Als gestrichelt bezifferte alternative Ausführungen des Übertragungssystems 4 können auch eine starre Relayoptik 42 oder eine einzelne optische Faser, die mit Hilfe eines Mikroscanners das Bildfeld abtastet (fasergekoppelter Mikroscanner 43), anstelle des Bildleitfaserbündels 41 angekoppelt sein, die in gleicher Weise durch die Adapterhülse 33 in der mechanischen Fassung 32 zum optischen System 2 des Kopfes 3 justiert sind.

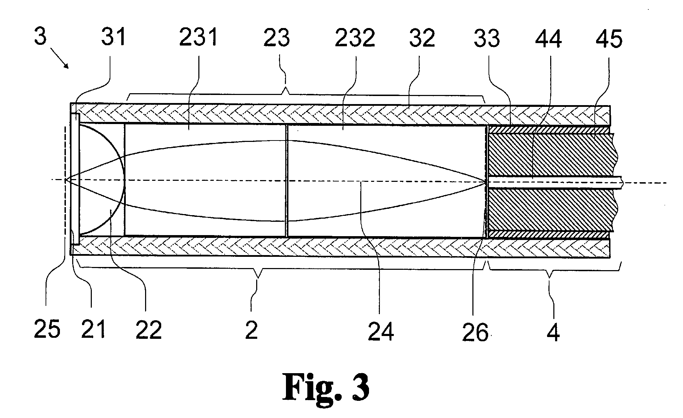

Fig. 3 zeigt ein Ausführungsbeispiel, bei dem nur eine punktweise Abbildung des Lichtes, das aus einer dünnen Anregungsfaser 44 austritt, entlang der optischen Achse 24 des Systems 2 bereitgestellt wird. Das vom Objekt 1 kommende Licht (rückreflektiertes Licht bzw. Fluoreszenzlicht bei Einphotonen-, Zwei- oder Multiphotonenabsorption) wird dabei integral durch eine Empfangsfaser 45 aufgefangen und einer Detektion zugeführt. Alternativ könnte es auch wieder in die Anregungsfaser 44 eingekoppelt und auf den Detektor (nicht dargestellt) übertragen werden.

Die Bildabtastung des Objekts 1 kommt in diesem Fall durch das Scannen (kontrolliertes Bewegen) des gesamten optischen Kopfes 2 zustande. Vorteilhaft an dieser Anordnung ist, dass die Korrektur der Aberrationen des Systems 2 besser gelingt, da nur ein Bildpunkt auf der optischen Achse 33 aktiv ist und damit nur sphärische und chromatische Aberration von Bedeutung sind. Durch das Scannen des gesamten optischen Kopfes 2 besitzen dann alle Bildpunkte die gleiche Abbildungsqualität.

Bei dieser Ausführung der Erfindung kann auf die diffraktive Linse 27 für die Achromatisierung der GRIN-Optik 23 (im Bereich schwach divergenter Strahlen zwischen den GRIN-Linsen 231 und 232) ganz verzichtet werden, weil keine chromatische Korrektur notwendig ist, da das Fluoreszenzlicht integral detektiert wird.

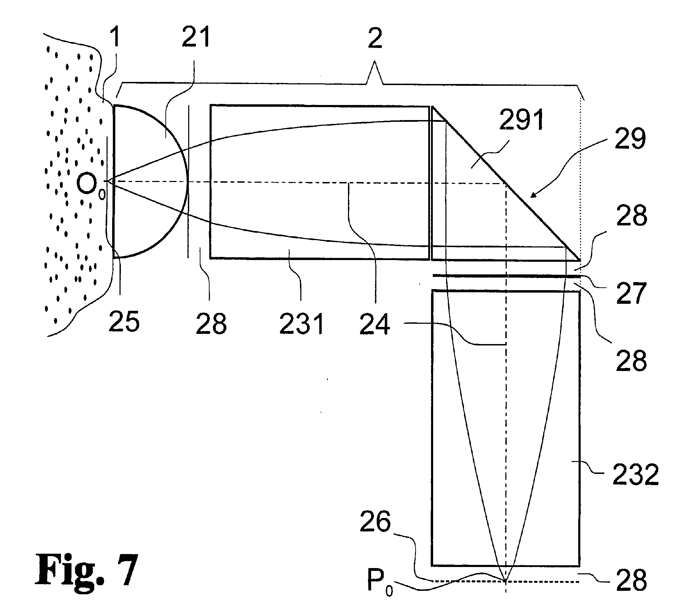

Ein besonders einfaches System 2 ergibt sich dann, wenn das Brechzahlprofil der GRIN-Linsen 231 und 232 so geformt ist, dass sich minimierte Aberrationen (vor allem sphärische Aberration) des Gesamtsystems 2 ohne diffraktive Linse 27 (Fig. 3) ergeben, wodurch die GRIN-Linsen 231, 232 zu einer einzigen GRIN-Linse zusammengefasst werden können. Die in diesem Beispiel nicht durchgeführte Korrektur der chromatischen Aberration kann in solchen Fällen entfallen, wenn in einem engen Wellenlängenspektrum (monochromatisch) gearbeitet wird, wenn Anregungs- und Detektionslicht in optisch getrennten Strahlengängen geführt werden (siehe Ausführungsbeispiel gemäß Fig. 7) oder wenn die Detektion (z.B. Fluoreszenz) integral (ohne optische Abbildung) detektiert wird. Letzteres ist insbesondere bei der Multiphotonenlasermikroskopie ausreichend, weil die Anregung fast ausschließlich im Laserfokus stattfindet und eine Bildaufnahme durch punktweise Abtastung des Objekts mit dem Laserfokus (sog. Scanning) erzielt wird.

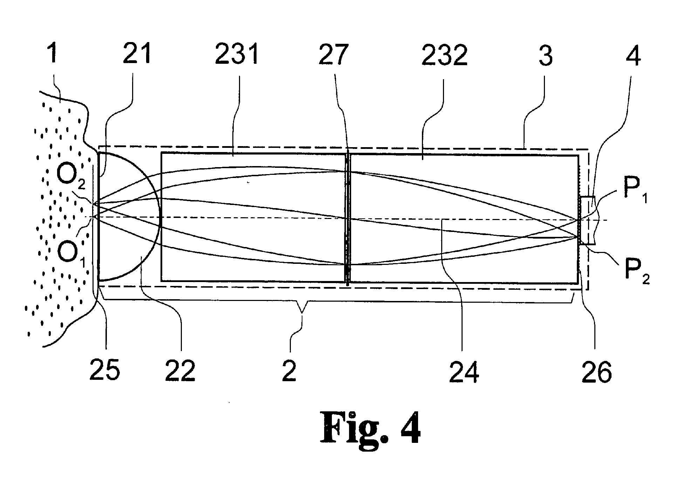

Fig. 4 zeigt eine Ausführung der Erfindung, bei der alle Zwischenräume 28 entlang der optischen Achse 24 des optischen Systems 2 auf Null reduziert wurden. Dadurch ergibt sich eine sehr einfache Montage, indem alle optischen Komponenten, beginnend mit dem Kugellinsenelement 22, gefolgt von der objektnahen GRIN-Linse 231, der diffraktiven Linse 27 und der objektfernen GRIN-Linse 232 in die mechanische Fassung 32 (nur in Fig. 2 und 3 gezeigt) eingestapelt werden und sich praktisch selbst justieren, wenn die abschließende Adapterhülse 33 zur Befestigung des Übertragungssystems 4 fixiert wird. Falls wie in Fig. 2 ein Bildleitfaserbündel 41 verwendet wird, so steht auch dieses direkt mit der objektfernen GRIN-Linse 232 in Kontakt, da die Bildebene 26 in der Austrittsfläche der GRIN-Linse 232 liegt.

1. Ausführungsbeispiel

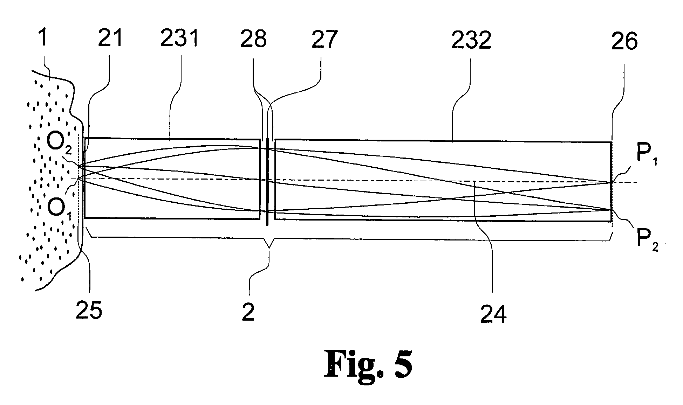

In einer konkreten Ausführungsform gemäß Fig. 5 weist das optische System 2 zwei gleiche GRIN-Linsen 231 und 232 mit einer nominellen numerischen Apertur von 0,5 und einem Durchmesser von 1,0 mm auf, wobei durch die diffraktive Linse 27 zwischen den beiden GRIN-Linsen 231 und 232 eine Achromatisierung für 830 nm und 500 nm erreicht wird.

Das Objekt 1 befindet sich an der Eintrittsfläche 21 der objektseitigen GRIN-Linse 231, die eine Dicke von 2,403 mm hat. Das Brechzahlprofil beider GRIN-Linsen 231 und 232 wird auf einen Polynomansatz bei einer Referenzwellenlänge $\lambda_{ref}$ = 0,67 $\mu$m zurückgeführt zu

$$n_{ref}(r) = n_0 + n_{r2}\,r^2 + n_{r4}\,r^4. \qquad (1)$$

Dabei ist r die radiale Koordinate, $n_0$, $n_{r2}$ und $n_{r4}$ sind die Brechzahlprofilparameter. Die Abhängigkeit des Brechzahlprofils von der Wellenlänge $\lambda$ wird mit folgendem Dispersionsmodell beschrieben,

$$n^2(\lambda) = n^2(\lambda_{ref}) + K_1\,(\lambda^2 - \lambda^2_{ref})/\lambda^2, \qquad (2)$$

wobei $n^2(\lambda_{ref}) = n^2_{ref}$ ist und K, eine Funktion von $n_{ref}$ ist.

$K_1$ wird durch den linearen Ansatz

$$K_1(n_{ref}) = K_{11} + K_{12}\,n^2_{ref} \qquad (3)$$

beschrieben.

Beide GRIN-Linsen 231 und 232 weisen das gleiche, durch folgende Parameter beschriebene Brechzahlprofil auf:

$$K_{11} = 0{,}11098;$$

$$K_{12} = -0{,}06172;$$

$$n_0 = 1{,}6289;$$

$$n_{r2} = -0{,}3482;$$

$$n_{r4} = 0{,}0620;$$

Die diffraktive Linse 27 wird zur Optimierung des optischen Designs als ideal dünne Linse angenommen. Die Brennweite hängt von der Wellenlänge mit

$$f = C/\lambda \qquad (4)$$

ab, wobei C = 0,004565 mm$^2$ ist. Damit besitzt die diffraktive Linse 27 bei 830 nm eine Brennweite von 5,5 mm und bei 500 nm eine Brennweite von 9,13 mm.

Die zweite GRIN-Linse 232 ist durch ihre Dicke von 2,171 mm so eingestellt, dass die Bildebene 26 sowohl für 830 nm als auch für 500 nm exakt in der Austrittsebene der objektfernen GRIN-Linse liegt, so dass in dieser Ebene die angestrebte Achromasiebedingung erfüllt ist. Dies ist insbesondere für nachgeschaltete Bildübertragungssysteme (Bildleitfaserbündel, Relayoptik, Mikroskop etc.) wichtig, die eine achromatische Abbildung voraussetzen.

## 2. Ausführungsbeispiel

In einer weiteren speziellen Ausführung nach dem optischen Grundschema von Fig. 4 besteht der miniatur-optische Kopf 3 aus einem optischen Fenster 31 (Material BK7) mit 0,170 mm Dicke, einem Kugellinsenelement 22 (Material: LaSFN9, Kugelradius 0,5 mm, Dicke 0,30 mm), zwei GRIN-Linsen 231 und 232 mit 1,0 mm Durchmesser und einer nominellen numerischen Apertur von 0,5, wobei eine Achromatisierung für 830 nm und 500 nm durch eine diffraktive Linse 27 zwischen den beiden GRIN-Linsen 231 und 232 erreicht wird.

Alle optischen Elemente befinden sich in direktem Kontakt (wie in Fig. 4 gezeigt), d.h. es existieren entlang der optischen Achse 24 keine Zwischenräume 28. Diese Wahl des Optikdesigns ist - besonders wegen der sehr kleinen Durchmesser der optischen Elemente (1 mm) - für die Justierung des gesamten optischen Systems 2 innerhalb der mechanischen Fassung 32 des miniaturisierten Kopfes 3 vorteilhaft. Das Objekt 1 befindet sich in diesem Fall in Wasser in einem Arbeitsabstand von 50 $\mu$m zur Eintrittsfläche 21 des objektseitigen Kugellinsenelements 22. Die sich anschließende objektseitige GRIN-Linse 231 besitzt eine Dicke von 1,480 mm.

Das Brechzahlprofil der beiden GRIN-Linsen 231 und 232 ist, wie im vorhergehenden ersten Ausführungsbeispiel, durch die Ansätze (1), (2) und (3) mit den folgenden Parametern beschrieben:

$$K_{11} = 0,11098;$$

$$K_{12} = -0,06172;$$

$$n_0 = 1,6289;$$

$$n_{r2} = -0,3532;$$

$$n_{r4} = 0,1032;$$

Für die Berechnung des optischen Designs der diffraktiven Linse 27 wird diese als ideal dünne Linse angenommen. Ihre Brennweite hängt von der Wellenlänge gemäß Gleichung (4) ab, wobei in diesem Beispiel C = 0,003901 mm$^2$ ist.

Damit ergibt sich für die diffraktive Linse 27 bei 830 nm eine Brennweite von 4,7 mm und bei 500 nm eine Brennweite von 7,802 mm. Die zweite GRIN-Linse 232 ist in ihrer Dicke mit 2,007 mm so eingestellt, dass die Bildebene 26 sowohl für 830 nm als auch für 500 nm 50 $\mu$m hinter der Austrittsebene der GRIN-Linse 232 in Luft liegt.

Das gesamte optische System 2 ist bis zu einer objektseitigen numerischen Apertur von 0,85 beugungsbegrenzt und folglich mit einer hohen örtlichen Auflösung in axialer und lateraler Dimension ausgestattet.

## 3. Ausführungsbeispiel

Miniatur-optischer Kopf aus 2 GRIN-Linsen mit 1,0 mm Durchmesser. Die objektseitige GRIN-Linse besitzt eine nominelle numerische Apertur von 0,5, die bildseitige GRIN-Linse besitzt eine nominelle numerische Apertur von 0,2, wobei eine Achromatisierung für 830 nm und 500 nm durch eine diffraktive Linse zwischen den beiden GRIN-Linsen erreicht wird. Das Objekt befindet sich in der Eintrittsfläche der objektseitigen GRIN-Linse, die eine Dicke von 2,403 mm besitzt. Das Brechzahlprofil der beiden GRIN-Linsen 231 und 232 ist, wie im vorhergehenden ersten Ausführungsbeispiel, durch die Ansätze (1), (2) und (3) definiert und für eine Referenzwellenlänge von $\lambda_{ref}$ = 0,67 $\mu$m berechnet. Aufgrund der unterschiedlichen numerischen Aperturen sind sie durch verschiedene Brechzahlprofile charakterisiert, wobei auch die Abhängigkeit der Profile von der Wellenlänge voneinander abweicht.

Für die objektseitige Linse (NA = 0.5) wird das Brechzahlprofil durch folgende Parameter beschrieben:

$$K_{11} = 0,11098;$$

$$K_{12} = -0,06172;$$

$$n_0 = 1{,}6289;$$

$$n_{r2} = -0{,}3482;$$

$$n_{r4} = 0{,}0620;$$

Für die zweite GRIN-Linse 232 (NA = 0,2) wird das Brechzahlprofil durch folgende Parameter beschrieben:

$$K_{11} = 0{,}05735;$$

$$K_{12} = -0{,}03843;$$

$$n_0 = 1{,}5239;$$

$$n_{r2} = -0{,}0522;$$

$$n_{r4} = 0{,}0015;$$

Die Brennweite der diffraktiven Linse 27 wird wie oben mit Gleichung (4) angesetzt, wobei in diesem Beispiel C = 0,0071961 mm$^2$ ist. Damit besitzt die diffraktive Linse 27 bei 830 nm eine Brennweite von 8,67 mm und bei 500 nm eine Brennweite von 14,3922 mm.

Die zweite GRIN-Linse 232 ist in ihrer Dicke mit 5,044 mm so eingestellt, dass die Bildebene 26 (im paraxialen Bereich) sowohl für 830 nm als auch für 500 nm exakt in der Austrittsebene der GRIN-Linse 232 liegt.

In einer reduzierten Ausführungsform außerhalb der Erfindung, bei der die numerische Apertur der objektseitigen GRIN-Linse 231 für die Abbildungszwecke ausreicht, kann - wie in Fig. 5 gezeigt - ein achromatisiertes System 2 auch ohne Kugellinsenelement 22 aufgebaut werden. Hierbei befindet sich die Abtastebene des Objekts 1 in einem gewissen Arbeitsabstand zur GRIN-Linse 23. Die diffraktive Linse 27 wird wie in den vorherigen Beispielen vorzugsweise im Bereich geringer Strahldivergenz zwischen den beiden GRIN-Linsen 231 und 232 positioniert. Die GRIN-Linse 232 bildet in die Bildebene 26 ab, die eine Zwischenbildebene für ein nachfolgendes Übertragungssystem 4 darstellt.

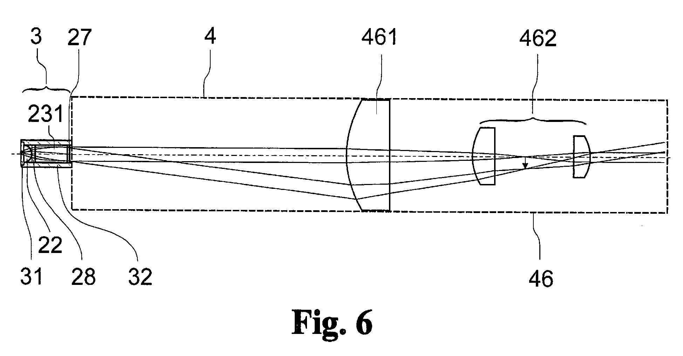

In einer besonderen adaptierten Ausführungsform der Erfindung - wie in Fig. 6 schematisch dargestellt - wird die objektferne GRIN-Linse 232 durch eine konventionelle refraktive Optik (z.B. mehrlinsiges System) ersetzt. Dies kann insbesondere dann sinnvoll sein, wenn der beschriebene miniatur-optische Kopf 3 anstelle eines Mikroskopobjektivs an einen Mikroskopaufbau 46 angesetzt ist.

Das optische System 2 ist in diesem Fall verkürzt, indem auf das Fenster 31 des miniatur-optischen Kopfes 3 das Kugellinsenelement 22 direkt aufgesetzt ist und nach einem Zwischenraum 28 nur eine objektseitige GRIN-Linse 231 sowie die diffraktive Linse 27 zur Achromatisierung folgt, und wird mit der mechanischen Fassung 32 an den Mikroskopaufbau 46 (als Übertragungssystem 4) gekoppelt. Der verkürzte optische Kopf 3 ersetzt somit das Mikroobjektiv eines beliebigen Mikroskopaufbaus 46. Im Beispiel nach Fig. 6 besteht dieser Aufbau aus einer Tubusoptik 461 und einer Okulareinheit 462, durch den ein reelles Zwischenbild erzeugt wird, das dann zur weiteren Bildaufnahme (nicht gezeigt) zur Verfügung steht. Die Funktion der zweiten GRIN-Linse 232 wird in diesem Beispiel praktisch durch den Mikroskopaufbau 46 übernommen.

Insbesondere für Anwendungen in der Endomikroskopie kann es vorteilhaft sein, wenn die optische Achse 24 der objektseitigen Eintrittsfläche 21 des optischen Systems 2 gegenüber der optischen Achse 24 des Übertragungssystems 4 abgewinkelt ist, da das abzubildende Objekt 1, wie z.B. biologisches Gewebe, oft an den Seitenwänden eines endoskopierten Hohlraums liegen. Dabei können verschiedene Ablenkwinkel zweckmäßig sein.

Ein Beispiel für einen Ablenkwinkel von 90° ist in Fig. 7 gezeigt. Ein strahlumlenkendes optisches Element 29 ist vorzugsweise ein Mikroprisma 291, das im schwach divergenten Strahlengang, zweckmäßigerweise zwischen den beiden GRIN-Linsen 231 und 232, positioniert ist, so dass die durch das Prisma 291 eingebrachten Aberrationen minimiert sind. Zwischen dem Prisma 291 und der zweiten GRIN-Linse 232 kann - wie im vorliegenden Beispiel - eine diffraktive Linse 27 zur Korrektur der chromatischen Aberration des Gesamtsystems positioniert sein, wobei der Zwischenraum 28 zur Minimierung der Abbildungsfehler dient.

Alternativ ist es auch möglich, dass an die Stelle des Mikroprismas 291 ein Spiegelscanner tritt, mit dem das mit Kugellinsenelement 22 und erster GRIN-Linse 231 abgebildete Objekt 1 zeilenweise abgetastet werden kann.

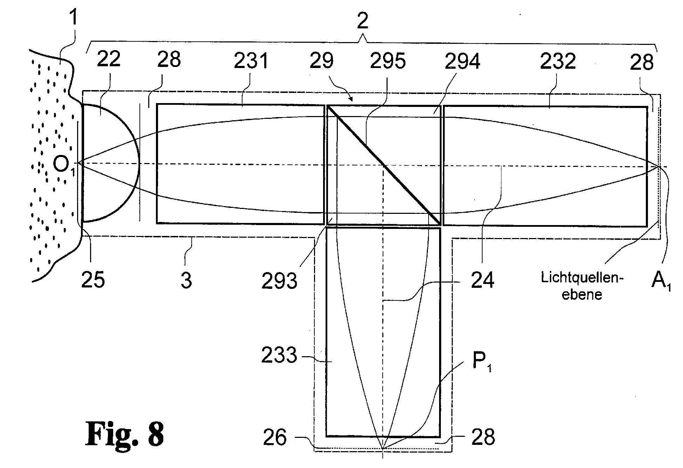

Fig. 8 zeigt eine Ausführung, bei der das strahlumlenkende optische Element 29 als Strahlteiler 292 ausgebildet ist. Für Anwendungen in der Fluoreszenz-Endomikroskopie oder auch bei der Multiphotonen-Mikroskopie und - Endomikroskopie ist es häufig sinnvoll, Anregungslicht und vom Objekt 1 emittierte Strahlung durch einen Strahlteiler 292 zu trennen, da beide in der Regel einen unterschiedlichen Spektralbereich aufweisen.

Der Strahlteiler 292 wird vorzugsweise als Würfel aus zwei Prismen 293 und 294 gebildet, wobei sich eine dichroitisch strahlteilende Beschichtung 295 auf der Grenzfläche zwischen beiden Prismen 293 und 294 befindet. Diese kann so gestaltet sein, dass die Beschichtung 295 das Anregungslicht in Transmission durchlässt und die vom Objekt 1 emittierte Strahlung reflektierend umlenkt. Alternativ ist auch der umgekehrte Fall möglich.

In Fig. 8 wird der Punkt $A_0$ einer Lichtquellenebene im Anregungsstrahlengang durch Reflexion im Strahlteiler 292 in den Objektpunkt $O_0$ abgebildet. Die am Objektpunkt $O_0$ angeregte Strahlung wird dann als Bildpunkt $P_0$ in die Bildebene 26 der GRIN-Linse 233 des Detektionsstrahlengangs abgebildet.

Das optische System 2 wird hier von einer objektseitigen GRIN-Linse 231, dem Strahlteiler 292 und zwei in den beiden resultierenden Teilstrahlengängen angeordneten objektfernen GRIN-Linsen 232 und 233 gebildet. Dabei können die GRIN-Linsen 232 und 233 in Analogie zur zweiten GRIN-Linse 232 der vorherigen Beispiele gleich dimensioniert oder in ihrer optischen Auslegung verschieden an spezielle Anregungs- und Detektionsstrahlengänge angepasst werden.

Bezugszeichenliste

1 Objekt

2 (miniatur-)optisches System
21 Eintrittsebene
22 Kugellinsenelement

23 GRIN-Optik
231 (objektseitige) erste GRIN-Linse
232 (objektferne) zweite GRIN-Linse

24 optische Achse
25 Objektebene
26 Bildebene
27 diffraktive Linse
28 Zwischenraum

29 Umlenkelement
291 (verspiegeltes) Mikroprisma
292 (dichroitischer) Strahlteiler
293, 294 Prismen
295 Beschichtung

3 optischer Kopf
31 Fenster
32 mechanische Fassung
33 Adapterhülse

4 Übertragungssystem
41 Bildleitfaserbündel
42 Relayoptik

43 (fasergekoppelter) Mikroscanner
44 Anregungsfaser
45 Empfangsfaser

46    Mikroskopsystem
461   Tubusoptik
462   Okulareinheit

$A_1$       Punkt (der Lichtquellenebene)
$O_1$, $O_2$   Objektpunkt
$P_1$, $P_2$   Bildpunkt

**Patentansprüche**

1.  Miniaturisiertes optisch abbildendes System mit hoher lateraler und axialer Auflösung für endomikroskopische Anwendungen, bei dem mindestens eine GRIN-Optik mit radialem Brechzahlprofil eingesetzt ist, die eine optische Abbildung von oberflächennahen Bereichen eines Objekts in einer Bildebene für ein optisches Übertragungssystem mit gegenüber der Übertragungslänge geringem Durchmesser erzeugt, wobei

    - eine refraktive plankonvexe Linse in Form eines homogenen optischen Kugellinsenelements (22) vorhanden ist und mit der GRIN-Optik (23) ein optisches System (2) bildet, wobei die plane Seite des Kugellinsenelements (22) eine ebene Eintrittsfläche (21) des optischen Systems (2) definiert und die Eintrittsfläche (21) orthogonal zu einer gemeinsamen optischen Achse (24) des optischen Systems (2) und des Übertragungssystem (4) ausgerichtet ist,
    - dem Kugellinsenelement (22) nachgeordnet eine erste GRIN-Linse (231) zur Divergenzreduktion des stark divergenten Lichtbündels vom Kugellinsenelement (22) vorhanden ist und
    - der ersten GRIN-Linse (231) nachgeordnet eine zweite GRIN-Linse (232) zum Anpassen des von der ersten GRIN-Linse (231) übertragenen Lichtbündels an die Apertur und das Objektfeld des nachfolgenden Übertragungssystems (4) entlang der optischen Achse (24) angeordnet ist.

2.  Anordnung nach Anspruch 1, **dadurch gekennzeichnet, dass** in einem schwach divergenten Bereich des Lichtbündels des optischen Systems (2) eine diffraktive Linse (27) zur Korrektur der chromatischen Aberration angeordnet ist.

3.  Anordnung nach Anspruch 2, **dadurch gekennzeichnet, dass** die diffraktive Linse (27) zwischen erster GRIN-Linse (231) und zweiter GRIN-Linse (232) angeordnet ist.

4.  Anordnung nach Anspruch 1, **dadurch gekennzeichnet, dass** zwischen refraktiver Linse (22) und objektseitiger GRIN-Linse (231) eine diffraktive Linse (27) zur Korrektur der chromatischen Aberration eines optischen Systems (2) angeordnet ist.

5.  Anordnung nach einem der Ansprüche 1 bis 4, **dadurch gekennzeichnet, dass** das optische System (2), das mindestens aus Kugellinsenelement (22), erster und zweiter GRIN-Linse (231, 232) besteht, innerhalb einer zylindrischen mechanischen Fassung (32) als miniatur-optischer Kopf (3) angeordnet ist, wobei die mechanische Fassung (32) mit einem Fenster (31) als Eintrittsfläche (21) vor der Planfläche des Kugellinsenelements (22) hermetisch abgeschlossen ist.

6.  Anordnung nach einem der Ansprüche 1 bis 5, **dadurch gekennzeichnet, dass** das optische System (2) ohne Zwischenräume (28) entlang der optischen Achse (24) angeordnet sind.

7.  Anordnung nach einem der Ansprüche 1 bis 5, **dadurch gekennzeichnet, dass** der zweiten GRIN-Linse (232) auf der optischen Achse (24) folgend ein Bildleitfaserbündel (41) nachgeordnet ist.

8.  Anordnung nach einem der Ansprüche 1 bis 5, **dadurch gekennzeichnet, dass** der zweiten GRIN-Linse (232) auf der optischen Achse (24) folgend eine Relayoptik (42) nachgeordnet ist.

9.  Anordnung nach einem der Ansprüche 1 bis 5, **dadurch gekennzeichnet, dass** der zweiten GRIN-Linse (232) auf der optischen Achse (24) folgend eine einzelne optische Faser nachgeordnet ist, die mit Hilfe eines Mikroscanners (43) bezüglich des optischen Systems (2) bewegt wird und damit ein Bild abtastet.

10. Anordnung nach Anspruch 5, **dadurch gekennzeichnet, dass** in der mechanischen Fassung (32) des miniatur-

# EP 1 906 225 B1

optischen Kopfes (3) der zweiten GRIN-Linse (232) folgend das Übertragungssystem (4) mit einer Adapterhülse (33) justiert ist.

11. Anordnung nach Anspruch 10, **dadurch gekennzeichnet, dass** in der mechanischen Fassung (32) entlang der optischen Achse (24) mittels einer Adapterhülse (33) eine dünne Anregungsfaser (44) zur Lichteinkopplung justiert ist.

12. Anordnung nach Anspruch 11, **dadurch gekennzeichnet, dass** um die dünne Anregungsfaser (44) herum eine Empfangsfaser (45) konzentrisch zur optischen Achse (24) vorhanden und mit der Adapterhülse (33) justiert ist.

13. Anordnung nach Anspruch 11, **dadurch gekennzeichnet, dass** die dünne Anregungsfaser (44) entlang der optischen Achse (24) zugleich als Empfangsfaser (45) eingesetzt ist.

14. Anordnung nach einem der Ansprüche 1 bis 5, **dadurch gekennzeichnet, dass** die erste und die zweite GRIN-Linse (231, 232) das gleiche Brechzahlprofil aufweisen.

15. Anordnung nach einem der Ansprüche 1 bis 5, **dadurch gekennzeichnet, dass** die erste und die zweite GRIN-Linse (231, 232) unterschiedliche Brechzahlprofile mit verschiedenen wellenlängenabhängigen Eigenschaften aufweisen.

16. Optische Anordnung mit einem Mikroskopaufbau und einem miniaturisierten optisch abbildenden System mit hoher lateraler und axialer Auflösung für endomikroskopische Anwendungen, bei dem mindestens eine GRIN-Optik mit radialem Brechzahlprofil eingesetzt ist, die zusammen mit dem Mikroskopaufbau eine optische Abbildung von oberflächennahen Bereichen eines Objekts in einer Bildebene erzeugt, wobei

   - eine refraktive plankonvexe Linse in Form eines homogenen optischen Kugellinsenelements (22) vorhanden ist und mit der GRIN-Optik (23) das miniaturisierte optisch abbildende System (2) bildet, wobei die plane Seite des Kugellinsenelements (22) eine ebene Eintrittsfläche (21) des optischen Systems (2) definiert und die Eintrittsfläche (21) orthogonal zu einer gemeinsamen optischen Achse (24) des optischen Systems (2) und des Mikroskopaufbaus (46) ausgerichtet ist,
   - dem Kugellinsenelement (22) nachgeordnet eine GRIN-Linse (231) der GRIN-Optik zur Divergenzreduktion des stark divergenten Lichtbündels vom Kugellinsenelement (22) vorhanden ist und
   - der GRIN-Linse (231) nachgeordnet der Mikroskopaufbau (46) angesetzt ist, sodass das miniaturisierte optisch abbildende System als Objektiv des Mikroskopaufbaus (46) eingesetzt ist.

17. Anordnung nach Anspruch 16, **dadurch gekennzeichnet, dass** in einem schwach divergenten Bereich des Lichtbündels des optischen Systems (2) eine diffraktive Linse (27) zur Korrektur der chromatischen Aberration angeordnet ist.

18. Anordnung nach einem der Ansprüche 1 bis 4, **dadurch gekennzeichnet, dass** zwischen erster und zweiter GRIN-Linse (231, 232) ein Umlenkelement (29) angeordnet ist.

19. Anordnung nach Anspruch 18, **dadurch gekennzeichnet, dass** das Umlenkelement (29) eine verspiegeltes Prisma (291) ist.

20. Anordnung nach Anspruch 18, **dadurch gekennzeichnet, dass** das Umlenkelement (29) ein Strahlteiler (292) ist.

21. Anordnung nach Anspruch 18, **dadurch gekennzeichnet, dass** der Strahlteiler (292) zwischen zwei gleichseitigen Prismen (293, 294) eine dichroitische Beschichtung (295) zur spektralen Trennung der vom Objekt (1) erzeugten Strahlung und der Anregungsstrahlung aufweist.


## Claims

1. Miniaturized optically imaging system with high lateral and axial resolution for endomicroscopic applications, using at least one GRIN lens system with radial refractive index profile which generates an optical imaging of near-surface areas of an object in an image plane for an optical transmission system with a small diameter compared to the transmission length, wherein

- a refractive plano-convex lens in the form of a homogeneous optical spherical lens element (22) is provided and, together with the GRIN optics (23), forms an optical system (2), wherein the plane side of the spherical lens element (22) defines a plane entrance surface (21) of the optical system (2), and the entrance surface (21) is oriented orthogonal to an optical axis (24) common to both the optical system (2) and the transmission system (4),
- the spherical lens element (22) is followed by a first GRIN lens (231) for reducing the divergence of the highly divergent light bundle from the spherical lens element (22), and
- a second GRIN lens (232) for adapting the light bundle transmitted by the first GRIN lens (231) to the aperture and object field of the downstream transmission system (4) is arranged along the optical axis (24) downstream of the first GRIN lens (231).

2. Arrangement according to claim 1, **characterized in that** a diffractive lens (27) is arranged in a weakly divergent area of the light bundle of the optical system (2) for correcting the chromatic aberration.

3. Arrangement according to claim 2, **characterized in that** the diffractive lens (27) is arranged between the first GRIN lens (231) and the second GRIN lens (232).

4. Arrangement according to claim 1, **characterized in that** a diffractive lens (27) is arranged between the refractive lens (22) and the object-side GRIN lens (231) for correcting the chromatic aberration of an optical system (2).

5. Arrangement according to one of claims 1 to 4, **characterized in that** the optical system (2), which comprises at least the spherical lens element (22) and the first and second GRIN lens (231, 232), is arranged inside a cylindrical mechanical mount (32) as a miniature optical head (3), the mechanical mount (32) being hermetically sealed up by a window (31) as entrance surface (21) in front of the plane surface of the spherical lens element (22).

6. Arrangement according to one of claims 1 to 5, **characterized in that** the optical system (2) is arranged along the optical axis (24) without gaps (28).

7. Arrangement according to one of claims 1 to 5, **characterized in that** an image-conducting fiber bundle (41) is arranged downstream of the second GRIN lens (232) on the optical axis (24).

8. Arrangement according to one of claims 1 to 5, **characterized in that** relay optics (42) are arranged downstream of the second GRIN lens (232) on the optical axis (24).

9. Arrangement according to one of claims 1 to 5, **characterized in that** an individual optical fiber is arranged downstream of the second GRIN lens (232) on the optical axis (24) and is moved with respect to the optical system (2) by means of a microscanner (43) so that it scans an image.

10. Arrangement according to claim 5, **characterized in that** the transmission system (4) following the second GRIN lens (232) is aligned in the mechanical mount (32) of the miniature optical head (3) by an adapter sleeve (33).

11. Arrangement according to claim 10, **characterized in that** a thin excitation fiber (44) for coupling in light is aligned in the mechanical mount (32) along the optical axis (24) by an adapter sleeve (33).

12. Arrangement according to claim 11, **characterized in that** a reception fiber (45) is provided around the thin excitation fiber (44) concentric to the optical axis (24) and aligned by the adapter sleeve (33).

13. Arrangement according to claim 11, **characterized in that** the thin excitation fiber (44) is used along the optical axis (24) as a reception fiber (45) simultaneously.

14. Arrangement according to one of claims 1 to 5, **characterized in that** the first GRIN lens (231) and the second GRIN lens (232) have the same refractive index profile.

15. Arrangement according to one of claims 1 to 5, **characterized in that** the first GRIN lens (231) and the second GRIN lens (232) have different refractive index profiles with different wavelength-dependent properties.

16. Optical arrangement with a microscope body and a miniaturized optically imaging system with high lateral and axial resolution for endomicroscopic applications, using at least one GRIN lens system with radial refractive index profile which, together with the microscope body, generates an optical imaging of near-surface areas of an object in an image plane, wherein

- a refractive plano-convex lens in the form of a homogeneous optical spherical lens element (22) is provided and, together with the GRIN optics (23), forms the miniaturized optically imaging system (2), wherein the plane side of the spherical lens element (22) defines a plane entrance surface (21) of the optical system (2), and the entrance surface (21) is oriented orthogonal to an optical axis (24) common to both the optical system (2) and the microscope body (46),
- the spherical lens element (22) is followed by a GRIN lens (231) of the GRIN optics for reducing the divergence of the highly divergent light bundle from the spherical lens element (22), and
- the GRIN lens (231) is followed by the microscope body (46) fitted thereto, so that the miniaturized optically imaging system is used as an objective of the microscope body (46).

17. Arrangement according to claim 16, **characterized in that** a diffractive lens (27) is arranged in a weakly divergent area of the light bundle of the optical system (2) for correcting the chromatic aberration.

18. Arrangement according to one of claims 1 to 4, **characterized in that** a deflecting element (29) is arranged between the first GRIN lens (231) and the second GRIN lens (232).

19. Arrangement according to claim 18, **characterized in that** the deflecting element (29) is a reflective prism (291).

20. Arrangement according to claim 18, **characterized in that** the deflecting element (29) is a beamsplitter (292).

21. Arrangement according to claim 18, **characterized in that** the beamsplitter (292) has a dichroic coating (295) between two equilateral prisms (293, 294) for spectral separation of the radiation generated by the object (1) and the excitation radiation.

**Revendications**

1. Système d'imagerie optique miniature à haute résolution latérale et axiale pour des applications endomicroscopiques, utilisant au moins un système optique GRIN avec un profil d'indice de réfraction radial qui génère une imagerie optique de zones proches de la surface d'un objet dans un plan d'image pour un système de transmission optique de faible diamètre comparé à la longueur de transmission, dans lequel

- une lentille plan-convexe réfractive sous la forme d'un élément de lentille sphérique (22) optique homogène est prévue et constitue, avec le système optique GRIN (23), un système optique (2), dans lequel le côté plan de l'élément de lentille sphérique (22) définit une surface d'entrée (21) plane du système optique (2), et la surface d'entrée (21) est orientée orthogonalement à un axe optique (24) commun au système optique (2) et système de transmission (4),
- l'élément de lentille sphérique (22) est suivi d'une première lentille GRIN (231) pour réduire la divergence du faisceau lumineux fortement divergent de l'élément de lentille sphérique (22), et
- une deuxième lentille GRIN (232) pour adapter le faisceau lumineux transmis par la première lentille GRIN (231) à l'ouverture et au champ d'objet du système de transmission (4) en aval est disposée le long de l'axe optique (24) en aval de la première lentille GRIN (231).

2. Agencement selon la revendication 1, **caractérisé en ce qu'**une lentille diffractive (27) est disposée dans une zone faiblement divergente du faisceau lumineux du système optique (2) pour corriger l'aberration chromatique.

3. Agencement selon la revendication 2, **caractérisé en ce que** la lentille diffractive (27) est disposée entre la première lentille GRIN (231) et la deuxième lentille GRIN (232).

4. Agencement selon la revendication 1, **caractérisé en ce qu'**une lentille diffractive (27) est disposée entre la lentille réfractive (22) et la lentille GRIN (231) côté objet pour corriger l'aberration chromatique d'un système optique (2).

5. Agencement selon une des revendications 1 à 4, **caractérisé en ce que** le système optique (2), qui comprend au moins l'élément de lentille sphérique (22) et la première et la deuxième lentille GRIN (231, 232), est disposé à l'intérieur d'une monture mécanique (32) cylindrique comme tête optique (3) miniature, la monture mécanique (32) étant fermée hermétiquement par une fenêtre (31) comme surface d'entrée (21) devant la surface plane de l'élément de lentille sphérique (22).

6. Agencement selon une des revendications 1 à 5, **caractérisé en ce que** le system optique (2) est disposé le long de l'axe optique (24) sans espaces (28).

7. Agencement selon une des revendications 1 à 5, **caractérisé en ce qu'**un faisceau de fibre conducteur d'image (41) est disposé en aval de la deuxième lentille GRIN (232) sur l'axe optique (24).

8. Agencement selon une des revendications 1 à 5, **caractérisé en ce qu'**un système optique relais (42) est disposé en aval de la deuxième lentille GRIN (232) sur l'axe optique (24).

9. Agencement selon une des revendications 1 à 5, **caractérisé en ce qu'**une fibre optique individuelle est disposée en aval de la deuxième lentille GRIN (232) sur l'axe optique (24) et bougée par rapport au système optique (2) au moyen d'un microscanner (43) de façon qu'elle balaye une image.

10. Agencement selon la revendication 5, **caractérisé en ce que** le système de transmission (4) suivant la deuxième lentille GRIN (232) est ajusté dans la monture mécanique (32) de la tête optique (3) miniature par une douille d'adaptation (33).

11. Agencement selon la revendication 10, **caractérisé en ce qu'**une fine fibre d'excitation (44) pour coupler de la lumière est ajustée dans la monture mécanique (32) le long de l'axe optique (24) par une douille d'adaptation (33).

12. Agencement selon la revendication 11, **caractérisé en ce qu'**une fibre de réception (45) est prévue autour de la fine fibre d'excitation (44) concentriquement à l'axe optique (24) et ajustée par la douille d'adaptation (33).

13. Agencement selon la revendication 11, **caractérisé en ce que** la fine fibre d'excitation (44) est utilisée le long de l'axe optique (24) comme fibre de réception (45) simultanément.

14. Agencement selon une des revendications 1 à 5, **caractérisé en ce que** la première lentille GRIN (231) et la deuxième lentille GRIN (232) ont le même profil d'indice de réfraction.

15. Agencement selon une des revendications 1 à 5, **caractérisé en ce que** la première lentille GRIN (231) et la deuxième lentille GRIN (232) ont des profils d'indice de réfraction différents avec des propriétés dépendantes de la longueur d'onde différentes.

16. Agencement optique avec un corps de microscope et un système d'imagerie optique miniature à haute résolution latérale et axiale pour des applications endomicroscopiques, utilisant au moins un système optique GRIN avec un profil d'indice de réfraction radial qui génère, avec le corps de microscope, une imagerie optique de zones proches de la surface d'un objet dans un plan d'image, dans lequel

   - une lentille plan-convexe réfractive sous la forme d'un élément de lentille sphérique (22) optique homogène est prévue et constitue, avec le système optique GRIN (23), le système d'imagerie optique miniature (2), dans lequel le côté plan de l'élément de lentille sphérique (22) définit une surface d'entrée (21) plane du système optique (2), et la surface d'entrée (21) est orientée orthogonalement à un axe optique (24) commun au système optique (2) et corps de microscope (46),
   - l'élément de lentille sphérique (22) est suivi d'une lentille GRIN (231) du système optique GRIN pour réduire la divergence du faisceau lumineux fortement divergent de l'élément de lentille sphérique (22), et
   - la lentille GRIN (231) est suivie du corps de microscope (46) fixé à celle-ci, de façon que le système d'imagerie optique miniature est utilisé comme objectif du corps de microscope (46).

17. Agencement selon la revendication 16, **caractérisé en ce qu'**une lentille diffractive (27) est disposée dans une zone faiblement divergente du faisceau lumineux du système optique (2) pour corriger l'aberration chromatique.

18. Agencement selon une des revendications 1 à 4, **caractérisé en ce qu'**un élément de déviation (29) est disposé entre la première lentille GRIN (231) et la deuxième lentille GRIN (232).

19. Agencement selon la revendication 18, **caractérisé en ce que** l'élément de déviation (29) est un prisme réflectif (291).

**20.** Agencement selon la revendication 18, **caractérisé en ce que** l'élément de déviation (29) est un diviseur de faisceau (292).

**21.** Agencement selon la revendication 18, **caractérisé en ce que** le diviseur de faisceau (292) a un revêtement (295) dichroïque entre deux prismes (293, 294) équilatéraux pour la séparation spectrale du rayonnement généré par l'objet (1) et le rayonnement d'excitation.

**Fig. 1**

31  22  28  231  27  28  232  32  28  41  33

25      3       2           24          26   43  4   42

**Fig. 2**

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1283413 B1
- DE 10015455 A1
- US 5377047 A
- US 6252722 B1
- GB 2178555 A
- EP 0609093 A1